# FASCICULE DE BREVET EUROPEEN

(11) **EP 1 175 057 B1**
(45) Date de publication et mention de la délivrance du brevet: **28.06.2006**
(21) Numéro de dépôt: 00402056.6
(22) Date de dépôt: 19.07.2000
(51) Int. Cl.: H04L 29/06, G06F 17/30

(54) **Procédé de déport d'éxécution de certaines opérations d'un système central sur un système satellite et le système de communication correspondant**
Verfahren zur Fernausführung bestimmter Operationen eines Zentralsystems in einem Satellitensystem und entsprechendes Kommunikationssystem.
Method for permitting the remote execution of certain operations of a central system in a satellite system and the corresponding communication system

(43) Date de publication de la demande: 23.01.2002
(73) Titulaire: BULL S.A., 78430 Louveciennes (FR)
(72) Inventeur: Pigache, Jean-Paul, 78450 Villepreux (FR); Pinson, Denis, 78770 Goupilleres (FR); Sala, Patrick, 78440 Porcheville (FR)
(74) Mandataire: Debay, Yves

(56) Documents cités:
- EP-A- 0 398 641
- PETRAVICK D L ET AL: "REMOTE PROCEDURE EXECUTION SOFTWARE FOR DISTRIBUTED SYSTEMS" IEEE TRANSACTIONS ON NUCLEAR SCIENCE, IEEE INC. NEW YORK, US, vol. 36, no. 5, 1 octobre 1989 (1989-10-01), pages 1706-1709, XP000070312 ISSN: 0018-9499

## Description

Le domaine de l'invention est celui des systèmes informatiques et concerne plus particulièrement un système central dont on veut déporter une partie d'exécution de certaines opérations sur un système satellite.

Un déport d'exécution est par exemple intéressant lorsque le système central est un système propriétaire. Les opérations du système propriétaire bénéficient d'une puissance de calcul ainsi que d'un niveau de sécurité et de fiabilité élevé. Un système satellite du monde dit ouvert, permet d'utiliser du matériel et du logiciel standard du marché.

Lorsqu'une tâche est entièrement réalisée dans un système unique, l'exécution des opérations est rapide car elle fonctionne en mode contrôle commande sur des organes qui réagissent en mode esclave. Lorsque l'exécution d'une tâche est répartie entre plusieurs systèmes différents, l'état de la technique propose habituellement de faire communiquer les systèmes au moyen de messages. On connaît les architectures de type client serveur. En attribuant la fonction client au système central et la fonction serveur au système satellite, le système central établirait une connexion avec le système satellite, enverrait un message de requête au système satellite qui retournerait un message de réponse. Cependant, la traversée de nombreuses couches de communication par les messages ne donnent pas de performances comparables en termes de rapidité aux opérations exécutées intégralement dans un même système.

Pour pallier les inconvénients précédemment mentionnés de l'état de la technique, l'objet de l'invention est un procédé entre un système central et un système satellite pour faire exécuter une opération du système central par le système satellite, tel que revendiqué dans la revendication 2.

L'objet de l'invention est aussi le système de communication tel que revendiqué dans les revendications 1 and 7.

D'autres avantages et détails de l'invention ressortent de l'exemple de mise en oeuvre préférée décrite ci-après en référence aux figures où:
- la figure 1 présente un système central, un système satellite et des systèmes périphériques;
- la figure 2 présente un format de bloc conforme à l'invention;
- la figure 3 présente un diagramme d'états du système satellite pour un lien descendant;
- la figure 4 présente un diagramme d'états du système central pour le lien descendant;
- la figure 5 présente un schéma de traitement de blocs dans le système satellite;
- la figure 6 présente un diagramme d'états du système satellite pour un lien montant.

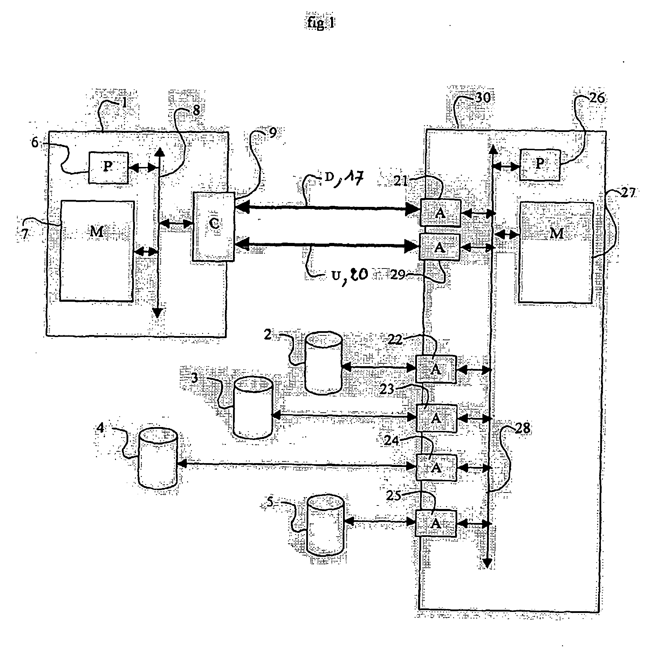

En référence à la figure 1, un système central 1 comprend généralement un ou plusieurs processeurs 6 qui accèdent à des programmes et des données adressés dans une mémoire à accès aléatoire 7 au moyen d'un bus 8. De façon à pouvoir traiter des données hors de l'espace d'adressage physique direct de la mémoire 7, le système central 1 effectue des opérations d'accès à des sous-systèmes périphériques 2, 3, 4, 5, comprenant par exemple des mémoires de masse telles que des disques et des bandes magnétiques.

Chaque sous système périphérique 2, 3, 4, 5 est identifié par un numéro d'unité logique LUN (Logical Unit Number en anglais). Dans le système central 1, une carte de contrôle 9 est connectée au bus 8 pour envoyer des commandes d'écriture et de lecture ainsi que des données correspondant aux commandes d'écriture vers les sous systèmes périphériques, et pour recevoir des données qui proviennent des sous-systèmes périphériques en réponse aux commandes de lecture.

Pour effectuer une opération d'accès à un sous-système périphérique, le système central 1 envoie une interruption à la carte de contrôle 9. A réception d'une interruption, la carte de contrôle 9 lit en mémoire 7 des paramètres qualifiant l'opération d'accès tels que le type d'opération, le numéro d'unité logique qui identifie le sous-système périphérique auquel s'applique l'opération et les adresses de la mémoire 7 réservées aux données de l'opération.

Si l'opération est de type écriture, la carte de contrôle 9 génère une commande d'écriture à destination du sous système périphérique identifié avec à sa suite les données de l'opération qui sont lues en mémoire 7. A réception d'un statut en retour du sous système-périphérique qui indique que la commande d'écriture a été correctement effectuée, la carte de contrôle 9 génère un signal en mémoire 7 pour informer le système central 1 que l'opération d'écriture est terminée.

Si l'opération est de type lecture, la carte de contrôle 9 génère une commande de lecture à destination du sous système périphérique identifié. A réception des données lues en retour du sous système-périphérique, la carte de contrôle 9 écrit en mémoire 7 les données reçues et génère un signal pour informer le système central 1 que l'opération de lecture est terminée.

Un système satellite 30 comprend un ou plusieurs processeurs 26 qui accèdent à des programmes et des données adressés dans une mémoire à accès aléatoire 27 au moyen d'un bus 28. Dans le système satellite 30, un coupleur 22 assure une liaison avec le sous-système 2, un coupleur 23 assure une liaison avec le sous-système 3, un coupleur 24 assure une liaison avec le sous-système 4, un coupleur 25 assure une liaison avec le sous-système 5. Les liaisons assurées par les coupleurs 22,...,25 sont de types standards tels que SCSI (Small Computer Interface) ou Fiber-Chanel. Des pilotes (driver en anglais) standards, hébergés en mémoire 27, gèrent alors les coupleurs 22,...,25 via le bus 28 auquel ces coupleurs sont raccordés.

La carte de contrôle 9 est reliée au système satellite 30 par un lien 17 dit descendant (D pour down en anglais) et par un lien 20 dit montant (U pour up en anglais). Chacun des liens 17 et 20 est réalisé au moyen d'une liaison rapide standard telle que "Wide Ultra SCSI" à 40 MB/sec. Un coupleur 21 et un coupleur 29 sont raccordés au bus 28 dans le système satellite 30, de façon à rendre le système satellite 30, maître sur chacun des liens 17 et 20. Des pilotes standards, hébergés en mémoire 27, gèrent alors les coupleurs 21 et 29.

La carte de contrôle 9 est déclarée en mode esclave sur chacun des liens 17 et 20. Ainsi, le système satellite 30 envoie des commandes de lecture sur le lien 17 au moyen du coupleur 21. Le système satellite 30 envoie des commandes d'écriture et des blocs à écrire, sur le lien 20 au moyen du coupleur 29.

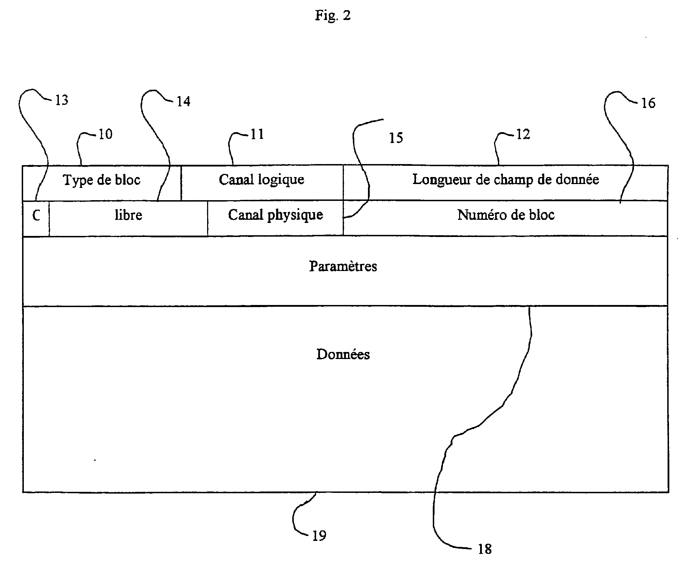

En référence à la figure 2, chaque bloc est constitué d'une entête et d'un champ de données 19.

L'entête comprend un champ 10 pour identifier un type auquel appartient le bloc, un champ 11 pour identifier un canal logique pour véhiculer le bloc, un champ 12 pour indiquer une longueur du champ de données 19, un champ 13 pour indiquer si le bloc est le dernier véhiculé sur le canal logique identifié, un champ 15 pour identifier un canal physique auquel est destiné le bloc, un champ 16 pour indiquer un numéro du bloc, et un champ 18 pour contenir des paramètres utiles à un traitement du bloc. L'entête peut aussi comprendre un ou plusieurs champs 14 libres pour d'éventuelles utilisations ultérieures.

Dans l'exemple de réalisation considéré, à titre non limitatif, les champs 10 et 11 ont une longueur de huit bits, les champs 12 et 16 ont une longueur de seize bits, le champ 13 a une longueur de un bit, le champ 14 a une longueur de neuf bits, le champ 15 a une longueur de six bits et le champ 18 a une longueur de soixante quatre bits.

Le champ 19 a une longueur variable donnée par la valeur du champ 12.

Les types de bloc définis sont les suivants:
- bloc de données transmis du système central au système satellite;
- bloc de données transmis du système satellite au système central;
- bloc de statut terminé;
- bloc de statut spécial;
- bloc de service transmis du système central au système satellite;
- bloc de service transmis du système satellite au système central.

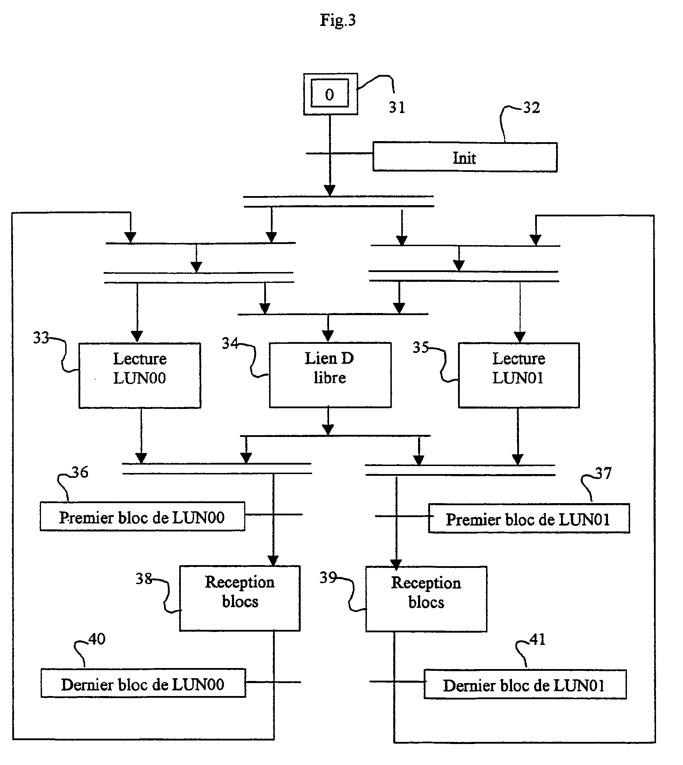

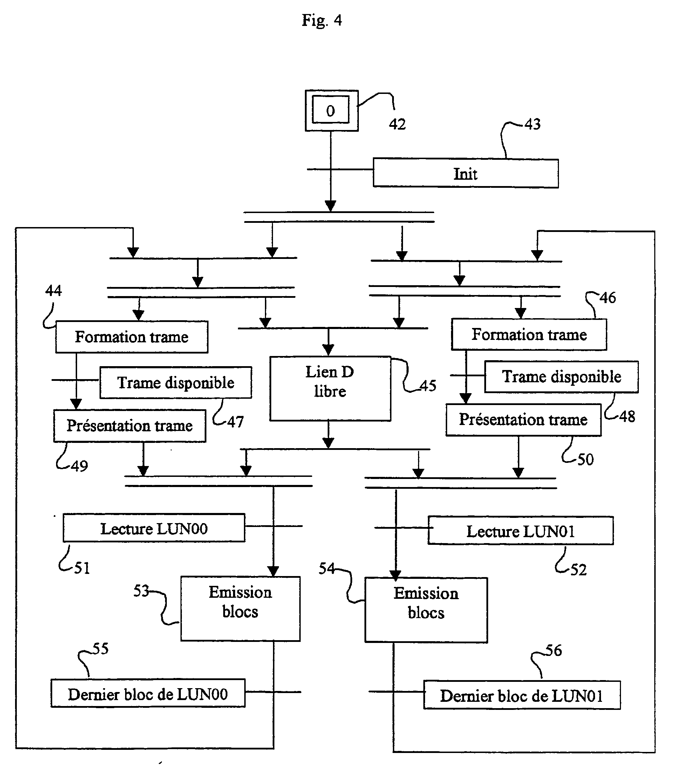

En référence à la figure 3, un diagramme d'états du système satellite 30, et à la figure 4, un diagramme d'états du système central 1, permettent chacun de décrire des étapes utiles à la mise en oeuvre d'un protocole d'échanges sur le lien 17, conforme à l'invention.

Des conventions générales de lecture de ces diagrammes seront utilisées dans la suite de la description. On y distingue des étapes 31, 35, 39 telles que le passage d'une étape à la suivante est symbolisé par une ou plusieurs flèches dont une flèche entre deux étapes est coupée par un trait perpendiculaire qui indique une condition de transition 32, 37, 41 à une étape suivante.

L'état logique de l'amont d'une flèche est identique à l'état logique d'une étape dont elle est issue ou à une combinaison logique d'états en aval de flèches qui la précèdent. Ces combinaisons logiques sont représentées par des traits horizontaux simples ou doubles sur lesquels arrivent et desquels repartent une ou plusieurs flèches.

Un simple trait horizontal indique qu'une disjonction (OU) d'états logiques d'une ou plusieurs flèches qui arrivent sur ce trait a la même valeur qu'une disjonction logique d'une ou plusieurs flèches qui partent de ce trait.

Un double trait horizontal indique qu'une conjonction (ET) d'états logiques d'une ou plusieurs flèches qui arrivent sur ce trait a la même valeur qu'une conjonction logique d'une ou plusieurs flèches qui partent de ce trait.

En absence de trait perpendiculaire qui coupe une flèche pour indiquer une transition, un état logique bas ou haut de la flèche en aval est identique à un état logique en amont de la flèche.

En présence de trait perpendiculaire qui coupe une flèche pour indiquer une transition, l'état logique en aval de la flèche est égal à une conjonction logique de l'état logique en amont de la flèche et de l'état logique de la transition indiquée. Un passage de l'état logique bas à l'état logique haut de l'aval d'une flèche coupée par une transition a pour effet de faire passer l'amont de la flèche de l'état logique haut à l'état logique bas.

En appliquant les conventions ci-dessus explicitées à la figure 3, le système satellite 30 initialement dans une étape de référence 31 à l'état logique haut, est démarré par mise à l'état haut d'une transition d'initialisation 32. Ceci a pour effet de désactiver l'étape 31 en la mettant à l'état logique bas et d'activer des étapes 33 et 34 en les mettant à l'état logique haut.

L'étape 34 déclare le lien D libre pour un transfert de blocs de la carte de contrôle 9 vers le coupleur 21.

L'étape 33 envoie une commande de lecture sur le lien D, à destination d'un numéro d'unité logique LUN00. Ainsi, le système satellite 30 voit le système central 1 comme une unité de stockage telle que par exemple une bande magnétique de numéro d'unité logique LUN00.

Une réponse de la carte de contrôle 9 à la commande de lecture se traduit par un transfert de trame sur le lien 17, à destination du coupleur 21. Le premier bloc de la trame en provenance de l'unité logique de numéro LUN00 met une transition 36 à l'état haut.

Les états hauts des étapes 33 et 34 avec l'état haut de la transition 36, activent une étape 38 par mise à l'état haut et désactivent les étapes 33 et 34 par mise à l'état bas. L'étape 38 est celle de réception des blocs par le coupleur 21. Le dernier bloc de la trame en provenance de l'unité logique de numéro LUN00 met une transition 40 à l'état haut.

Les états hauts de l'étape 38 et de la transition 40, réactivent les étapes 33 et 34 par mise à l'état haut et désactivent l'étape 38 par mise à l'état bas.

De façon à augmenter les performances du lien 17, la mise à l'état haut de la transition 32 a pour effet supplémentaire de mettre une étape 35 à l'état haut.

L'étape 35 envoie une commande de lecture sur le lien D, à destination d'un numéro d'unité logique LUN01. Ainsi, le système satellite 30 voit de plus le système central 1 comme une unité de stockage telle que par exemple une bande magnétique de numéro d'unité logique LUN01.

Une réponse de la carte de contrôle 9 à la commande de lecture se traduit par un transfert de trame sur le lien 17, à destination du coupleur 21. Le premier bloc de la trame en provenance de l'unité logique de numéro LUN01 met une transition 37 à l'état haut.

Les états hauts des étapes 34 et 35 avec l'état haut de la transition 37, activent une étape 39 par mise à l'état haut et désactivent les étapes 34 et 35 par mise à l'état bas. L'étape 39 est celle de réception des blocs par le coupleur 21. Le dernier bloc de la trame en provenance de l'unité logique de numéro LUN01 met une transition 41 à l'état haut.

Les états hauts de l'étape 39 et de la transition 41, réactivent les étapes 34 et 35 par mise à l'état haut et désactivent l'étape 39 par mise à l'état bas.

L'activation simultanée des étapes 33 et 35 au démarrage permet d'optimiser les transferts sur le lien 17 en envoyant une deuxième commande de lecture sans avoir besoin d'attendre la réponse à la première commande de lecture. Dès la réception du dernier bloc en provenance de LUN00 ou LUN01, la transition 40, respectivement 41, réactive les étapes 33 et 34, respectivement 34 et 35. Les états possibles du lien 17 pour le système satellite 30 sont donc:
- étapes 33, 34 et 35 actives en attente de réponses à deux commandes de lecture;
- étapes 33 et 39 actives en attente de réponse à la commande de lecture sur LUN00 et en réception de réponse sur LUN01;
- étapes 35 et 38 actives en attente de réponse à la commande de lecture sur LUN01 et en réception de réponse sur LUN00.

En appliquant les conventions ci-dessus explicitées à la figure 4, le système central 1 initialement dans une étape de référence 42 à l'état logique haut, est démarré par mise à l'état haut d'une transition d'initialisation 43. Ceci a pour effet de désactiver l'étape 42 en la mettant à l'état logique bas et d'activer des étapes 44 et 45 en les mettant à l'état logique haut.

L'étape 45 met la carte de contrôle 9 en attente d'une commande sur le lien 17, déterminant ainsi un mode de fonctionnement esclave sur le lien 17.

L'étape 44 consiste à former une trame qui sera transmise au système satellite 30, en réponse à une commande de lecture par le coupleur 21. Lorsque le système central 1 déclenche une opération d'accès à un sous système périphérique 2, 3, 4, 5, le processeur 6 envoie sur le bus 8 à destination de la carte de contrôle 9, une commande de chargement pour un accès en lecture ou une commande de rangement pour un accès en écriture. A réception d'une commande de chargement ou de rangement, la carte de contrôle 9 élabore un ou plusieurs blocs sur le modèle de celui présenté en figure 2.

Pour une commande de chargement ou de rangement, la carte de contrôle 9 met dans le champ 10 une valeur qui indique que le bloc est de type bloc de données transmis du système central au système satellite, dans le champ 11 une valeur qui indique un numéro de canal logique commun à tous les blocs créés pour une même opération d'accès, dans le champ 12 une valeur qui indique la longueur du champ 19, dans le champ 15 une valeur qui indique le sous système périphérique concerné par l'opération d'accès et dans le champ 18 les paramètres nécessaires à l'opération d'accès tels qu'un mot de contrôle spécifiant un codage des données du champ 19, des drapeaux pour gérer des suspensions et des statuts pour gérer des erreurs.

Lorsque l'opération d'accès concerne une commande de chargement, la carte de contrôle 9 met dans le champ 19 des données de contrôle pour spécifier les instructions de chargement avec les adresses de début et de fin des données à charger en provenance du sous système périphérique concerné.

Lorsque l'opération d'accès concerne une commande de rangement, la carte de contrôle 9 met dans le champ 19 d'un premier bloc, des données de contrôle pour spécifier les instructions de rangement avec les adresses de début et de fin des données à ranger dans le sous système périphérique concerné. La carte de contrôle 9 lève un bit dans le champ 13 du premier et dans le champ 13 de chaque bloc précédant un bloc suivant puis incrémente le champ 16 du bloc suivant. Le bit du champ 13 est abaissé pour le dernier bloc de l'opération d'accès. Ceci permet de mettre dans le champ 19 des blocs suivants, les données à ranger dans le sous système périphérique concerné par l'opération d'accès.

La carte de contrôle 9 élabore aussi des blocs de service d'une part pour la gestion du lien 17, tests, surveillance d'activité, contrôle de flux, et d'autre part pour des opérations de maintenance et le report des erreurs. La carte de contrôle 9 spécifie alors dans le champ 10 qu'un tel bloc est un bloc de service. Un tel bloc peut être constitué d'une simple entête sans champ 19. Le champ 18 contient alors les paramètres de gestion ou de maintenance.

Les blocs élaborés par la carte de contrôle 9 sont mis en attente de pouvoir être transmis sur le lien 17.

Une mise à l'état haut de l'étape 44 déclenche deux actions. Une première action scrute les blocs en attente. Une deuxième action lève une temporisation pour le cas où aucun bloc ne serait en attente de pouvoir être transmis. Si aucun bloc n'est en attente à l'issue de la temporisation, la carte de contrôle 9 crée un bloc vide, c'est à dire un bloc constitué d'une simple entête sans champ 19 et qui indique son type vide dans le champ 10. Ceci permet de transmettre une réponse à l'ordre de lecture en provenance du coupleur 21, de façon à ne pas détecter de fausse erreur sur le lien 17 en absence de blocs à transmettre. La carte de contrôle 9 rassemble alors dans une trame de longueur compatible avec le contrôle de flux, les blocs de même type et pour des blocs de données, ceux d'une même opération d'accès.

Une transition 47 est à l'état haut dès qu'une trame est disponible. La transition 47 remet l'étape 44 à l'état bas et met une étape 49 à l'état haut. L'étape 49 présente la trame précédemment constituée, sur l'unité logique LUN00.

Une transition 51 est à l'état haut si la carte de contrôle 9 a reçu une commande de lecture sur le lien 17 pour l'unité logique LUN00. La conjonction d'états hauts des étapes 45, 49 et de l'état haut de la transition 51 active une étape 53 par sa mise à l'état haut et remise à l'état bas des étapes 45 et 49.

Dans l'étape 53, les blocs de la trame présentée sur l'unité logique LUN00 sont émis sur le lien 17 à destination du coupleur 21.

Le dernier bloc émis de la trame met une transition 55 à l'état haut. La conjonction d'états hauts de l'étape 53 et de la transition 55, remet l'étape 53 à l'état bas et réactive les étapes 44 et 45 par mise à l'état haut. Ceci permet d'émettre d'autres blocs, par exemple pour d'autres opérations d'accès ou pour la suite d'une même opération d'accès.

En dualité de la transition 32 et de l'étape 35 pour tirer profit des capacités de transfert du lien 17, la conjonction des états logiques haut de l'étape de référence 42 et de la transition d'initialisation 43 active de plus une étape 46 en la mettant à l'état logique haut.

De même que pour l'étape 44, une mise à l'état haut de l'étape 46 déclenche deux actions. Une première action scrute les blocs en attente. Une deuxième action lève une temporisation pour le cas où aucun bloc ne serait en attente de pouvoir être transmis. Si aucun bloc n'est en attente à l'issue de la temporisation, la carte de contrôle 9 crée un bloc vide, c'est à dire un bloc constitué d'une simple entête sans champ 19 et qui indique son type vide dans le champ 10. Ceci permet de transmettre une réponse à l'ordre de lecture en provenance du coupleur 21, de façon à ne pas détecter de fausse erreur sur le lien 17 en absence de blocs à transmettre. La carte de contrôle 9 rassemble alors dans une trame de longueur compatible avec le contrôle de flux, les blocs de même type et pour des blocs de données, ceux d'une même opération d'accès.

Une transition 48 est à l'état haut dès qu'une trame est disponible. La transition 48 remet l'étape 46 à l'état bas et met une étape 50 à l'état haut. L'étape 50 présente la trame précédemment constituée, sur l'unité logique LUN01.

Une transition 52 est à l'état haut si la carte de contrôle 9 a reçu une commande de lecture sur le lien 17 pour l'unité logique LUN01. La conjonction d'états hauts des étapes 45, 50 et de l'état haut de la transition 52 active une étape 54 par sa mise à l'état haut et remise à l'état bas des étapes 45 et 50.

Dans l'étape 54, les blocs de la trame présentée sur l'unité logique LUN01 est émise sur le lien 17 à destination du coupleur 21.

Le dernier bloc émis de la trame met une transition 56 à l'état haut. La conjonction d'états hauts de l'étape 54 et de la transition 56, remet l'étape 53 à l'état bas et réactive les étapes 46 et 45 par mise à l'état haut. Ceci permet d'émettre d'autres blocs, par exemple pour d'autres opérations d'accès ou pour la suite d'une même opération d'accès.

Les états possibles du lien 17 pour le système central 1 sont alors:
- étapes 44, 45 et 46 actives en attente de trames à transmettre;
- étapes 44, 45 et 50 actives en attente de trame pour LUN00 et de lecture pour LUN01;
- étapes 49, 45 et 46 actives en attente de lecture pour LUN00 et de trame pour LUN01;
- étapes 49, 45 et 50 actives en attente de lecture pour LUN00 et pour LUN01;
- étapes 53 et 46 ou 50 actives en attente de fin de transmission depuis LUN00;
- étapes 54 et 44 ou 49 actives en attente de fin de transmission depuis LUN01.

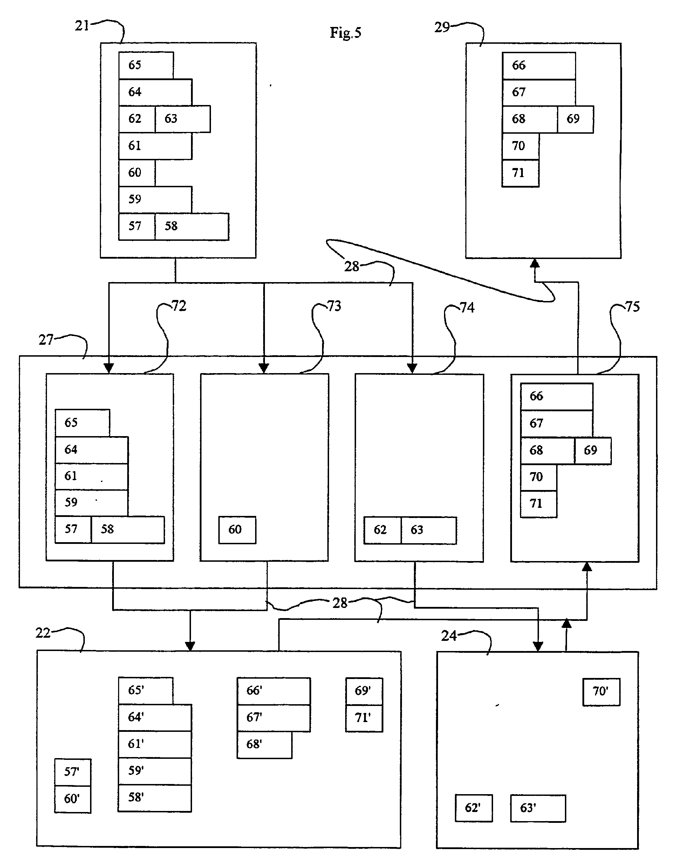

En référence à la figure 5, les trames reçues sur le coupleur 21 dans les étapes 38 et 39 sont traitées par le système satellite 30 de la façon suivante:
- A réception d'un bloc selon le protocole expliqué en référence aux figures précédentes, le système satellite 30 range ce bloc dans un tampon d'arrivée 72, 73, 74 correspondant au canal logique contenu dans le champ 11;
- A réception du dernier bloc d'un même canal logique, le système satellite 30 envoie le contenu du tampon 72, 73, 74 au coupleur 22, 23, 24, 25 correspondant au canal physique contenu dans le champ 15, en adaptant les commandes à ce coupleur;
- Le coupleur 22, 23, 24, 25 retourne une réponse rangée dans un tampon de départ 75;
- Le système satellite 30 transmet le contenu du tampon 75 au coupleur 29 selon la suite du protocole expliqué en référence aux figures suivantes.

Par exemple, dans l'étape 38, le coupleur 21 reçoit une trame comprenant des blocs 57, 58. Le champ 11 de ces blocs identifie un canal logique correspondant au tampon 72 contenu en mémoire 27. Le système satellite 30 range les blocs de la trame dans le tampon 72 via le bus 28. Le champ 13 du bloc 58 indique que d'autres blocs suivent pour le même canal logique.

Dans l'étape 39, le coupleur 21 reçoit une trame comprenant un bloc 59. Le champ 11 de ce bloc identifie un canal logique correspondant au tampon 72 contenu en mémoire 27. Le système satellite 30 range le bloc de la trame dans le tampon 72 via le bus 28. Le champ 13 du bloc 59 indique que d'autres blocs suivent pour le même canal logique.

Dans l'étape 39, le coupleur 21 reçoit une trame comprenant un bloc 60. Le champ 11 de ce bloc identifie un canal logique correspondant au tampon 73 contenu en mémoire 27. Le système satellite 30 range le bloc de la trame dans le tampon 73 via le bus 28. Le champ 13 du bloc 60 indique qu'il est le dernier de ce canal logique.

Le champ 19 du bloc 60 contient des commandes de chargement. Le système satellite 30 crée un bloc de contrôle 60' à partir du champ 19. Le champ 15 du bloc 60 identifie un canal physique correspondant au coupleur 22. Le système satellite 30 transmet le bloc 60' au coupleur 22 via le bus 28.

Dans l'étape 38, le coupleur 21 reçoit une trame comprenant un bloc 61. Le champ 11 de ce bloc identifie un canal logique correspondant au tampon 72 contenu en mémoire 27. Le système satellite 30 range le bloc de la trame dans le tampon 72 via le bus 28. Le champ 13 du bloc 61 indique qu'il précède un autre bloc du même canal logique.

Dans l'étape 39, le coupleur 21 reçoit une trame comprenant des blocs 62, 63. Le champ 11 de ces blocs identifie un canal logique correspondant au tampon 74 contenu en mémoire 27. Le système satellite 30 range les blocs de la trame dans le tampon 74 via le bus 28. Le champ 13 du bloc 63 indique qu'aucun autre bloc ne suit pour le même canal logique.

Le champ 19 du bloc 62 contient des commandes de rangement. Le système satellite 30 crée un bloc de contrôle 62' à partir du champ 19. Le champ 15 du bloc 62 identifie un canal physique correspondant au coupleur 24. Le système satellite 30 transmet le bloc 62' à une partie contrôle du coupleur 24 et le contenu du champ 19 du bloc 63 à une partie données du coupleur 24, via le bus 28, sous forme d'un bloc 63'.

Dans l'étape 38, le coupleur 21 reçoit une trame comprenant un bloc 64. Le champ 11 de ce bloc identifie un canal logique correspondant au tampon 72 contenu en mémoire 27. Le système satellite 30 range le bloc de la trame dans le tampon 72 via le bus 28. Le champ 13 du bloc 64 indique qu'il précède un autre bloc du même canal logique.

Dans l'étape 39, le coupleur 21 reçoit une trame comprenant un bloc 65. Le champ 11 de ce bloc identifie un canal logique correspondant au tampon 72 contenu en mémoire 27. Le système satellite 30 range le bloc de la trame dans le tampon 72 via le bus 28. Le champ 13 du bloc 65 indique qu'aucun autre bloc ne suit pour le même canal logique.

Le champ 19 du bloc 57 contient des commandes de rangement. Le système satellite 30 crée un bloc de contrôle 57' à partir du champ 19. Le champ 15 du bloc 57 identifie un canal physique correspondant au coupleur 22. Le système satellite 30 transmet le bloc 57' à une partie contrôle du coupleur 22 et le contenu du champ 19 des blocs 58, 59, 61, 64, 65 à une partie données du coupleur 22 sous forme de blocs 58', 59', 61', 64', 65', via le bus 28.

Le coupleur 22 exécute sur le sous-système périphérique 2, la commande de chargement spécifiée par le bloc 60'. Le sous-système périphérique retourne alors des blocs de données 66', 67', 68' et un bloc de statuts 69' au coupleur 22. Le système satellite 30 place alors chaque bloc 66', 67', 68', 69' dans le champ 19 d'un bloc 66, 67, 68, 69 conforme au protocole précédemment décrit. En particulier, le champ 10 indique que le bloc est de type bloc de données transmis du système satellite au système central, le champ 11 identifie le même canal logique que le champ 11 du bloc 60. Le champ 13 de chacun des blocs 66, 67, 68 indique que le bloc précède un autre bloc du même canal logique. Le champ 13 du bloc 69 indique que le bloc ne précède aucun autre bloc du même canal logique. Le système satellite 30 range les blocs 66, 67, 68, 69 dans le tampon 75 via le bus 28.

Le coupleur 24 exécute sur le sous-système périphérique 4, la commande de rangement spécifiée par le bloc 62'. Le sous-système périphérique retourne alors un bloc de statuts 70' au coupleur 24. Le système satellite 30 place alors le bloc 70' dans le champ 19 d'un bloc 70 conforme au protocole précédemment décrit. En particulier, le champ 10 indique que le bloc est de type bloc de données transmis du système satellite au système central, le champ 11 identifie le même canal logique que le champ 11 du bloc 62. Le champ 13 du bloc 70 indique que le bloc ne précède aucun autre bloc du même canal logique. Le système satellite 30 range le bloc 70 dans le tampon 75 via le bus 28.

Le coupleur 22 exécute sur le sous-système périphérique 2, la commande de rangement spécifiée par le bloc 57'. Le sous-système périphérique retourne alors un bloc de statuts 71' au coupleur 22. Le système satellite 30 place alors le bloc 71' dans le champ 19 d'un bloc 71 conforme au protocole précédemment décrit. En particulier, le champ 10 indique que le bloc est de type bloc de données transmis du système satellite au système central, le champ 11 identifie le même canal logique que le champ 11 du bloc 57. Le champ 13 du bloc 71 indique que le bloc ne précède aucun autre bloc du même canal logique. Le système satellite 30 range le bloc 71 dans le tampon 75 via le bus 28.

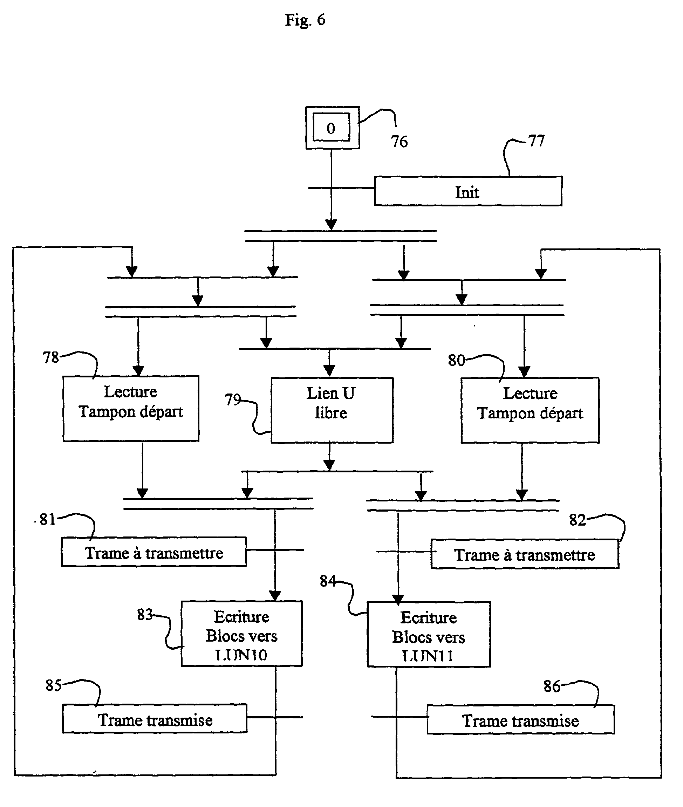

Les trames contenues dans le tampon 75 sont envoyées sur le lien 20 au moyen du coupleur 29, conformément au diagramme d'états de la figure 6.

En appliquant les conventions ci-dessus explicitées à la figure 6, le système satellite 30 initialement dans une étape de référence 76 à l'état logique haut, est démarré par mise à l'état haut d'une transition d'initialisation 77. Ceci a pour effet de désactiver l'étape 76 en la mettant à l'état logique bas et d'activer des étapes 78 et 79 en les mettant à l'état logique haut.

L'étape 79 déclare le lien U libre pour un transfert de blocs de la carte du coupleur 29 vers la carte de contrôle 9.

L'étape 78 lit le tampon de départ 75 de façon à détecter si une trame est prête à être transmise à un numéro d'unité logique LUN10. Ainsi, le système satellite 30 voit le système central 1 comme une unité de stockage telle que par exemple une bande magnétique de numéro d'unité logique LUN10.

La détection de trame dans le tampon 75 que l'étape 78 décide d'envoyer à l'unité logique de numéro LUN10 met une transition 81 à l'état haut.

Les états hauts des étapes 78 et 79 avec l'état haut de la transition 81, activent une étape 83 par mise à l'état haut et désactivent les étapes 78 et 79 par mise à l'état bas. L'étape 83 envoie sur le lien 20, une commande d'écriture sur l'unité logique LUN10 et les blocs de la trame à transmettre. Le dernier bloc de la trame transmise vers l'unité logique de numéro LUN10 met une transition 85 à l'état haut.

Les états hauts de l'étape 83 et de la transition 85, réactivent les étapes 78 et 79 par mise à l'état haut et désactivent l'étape 83 par mise à l'état bas.

De façon à augmenter les performances du lien 20, la mise à l'état haut de la transition 77 a pour effet supplémentaire de mettre une étape 80 à l'état haut.

L'étape 80 lit le tampon de départ 75 de façon à détecter si une trame est prête à être transmise à un numéro d'unité logique LUN11. Ainsi, le système satellite 30 voit aussi le système central 1 comme une unité de stockage telle que par exemple une bande magnétique de numéro d'unité logique LUN11.

La détection de trame dans le tampon 75 que l'étape 80 décide d'envoyer à l'unité logique de numéro LUN11 met une transition 82 à l'état haut.

Les états hauts des étapes 80 et 79 avec l'état haut de la transition 82, activent une étape 84 par mise à l'état haut et désactivent les étapes 80 et 79 par mise à l'état bas. L'étape 84 envoie sur le lien 20, une commande d'écriture sur l'unité logique LUN11 et les blocs de la trame à transmettre. Le dernier bloc de la trame transmise vers l'unité logique de numéro LUN11 met une transition 86 à l'état haut.

Les états hauts de l'étape 84 et de la transition 86, réactivent les étapes 80 et 79 par mise à l'état haut et désactivent l'étape 84 par mise à l'état bas.

L'activation simultanée des étapes 78 et 80 au démarrage permet d'optimiser les transferts sur le lien 20 en relisant le tampon 75 sans avoir besoin d'attendre une fin d'exécution de la première commande d'écriture. Dès la transmission du dernier bloc à écrire sur LUN10 ou LUN11, la transition 85, respectivement 86, réactive les étapes 78 et 79, respectivement 79 et 80. Les états possibles du lien 20 pour le système satellite 30 sont donc:
- étapes 78, 79 et 80 actives en attente de trames dans le tampon 75;
- étapes 78 et 84 actives en attente de fin d'écriture sur LUN11;
- étapes 80 et 83 actives en attente de fin d'écriture sur LUN10.

En reprenant l'exemple de la figure 4, la lecture du tampon 75 en étape 78 détecte une trame constituée du bloc de donnée 66. Une commande d'écriture LUN10 et le bloc 66 sont envoyés en étape 83.

La lecture du tampon 75 en étape 80 détecte une trame constituée du bloc de donnée 67. Après transmission du bloc 66, les étapes 79 et 78 sont réactivées. Une commande d'écriture LUN11 et le bloc 67 sont envoyés en étape 84. La lecture du tampon 75 en étape 78 détecte une trame constituée des blocs de donnée 68 et 69. Après transmission du bloc 67, les étapes 79 et 80 sont réactivées. Une commande d'écriture LUN10 et les bloc 68 et 69 sont envoyés en étape 83. La lecture du tampon 75 en étape 80 détecte une trame constituée du bloc de donnée 70. Après transmission des blocs 68 et 69, les étapes 79 et 78 sont réactivées. Une commande d'écriture LUN11 et le bloc 70 sont envoyés en étape 84.

Lorsque la carte de contrôle 9 a reçu les blocs 66 à 69 dont le champ 11 indique le même canal logique que le champ 11 du bloc 60, elle fournit sur le bus 8 une réponse à la commande de chargement qu'elle avait envoyée dans le champ 19 du bloc 60. La réponse est constituée du contenu des champs 19 des blocs 66 à 68, chargé en mémoire 7. La carte de contrôle 9 envoie aussi sur le bus 8, le contenu du champ 19 du bloc 69 pour signifier au système central 1 que l'opération de chargement est terminée.

Lorsque la carte de contrôle 9 a reçu le bloc 70 dont le champ 11 indique le même canal logique que le champ 11 du bloc 62, elle fournit sur le bus 8 une réponse à la commande de rangement qu'elle avait envoyée dans le champ 19 du bloc 62. La réponse est constituée du contenu du champ 19 du bloc 70, pour signifier au système central 1 que l'opération de rangement est terminée.

L'homme du métier comprend aisément de la description qui précède que les opérations du système central ne sont pas limitées à des opérations d'accès à des unités de stockage. L'enseignement de l'invention peut être avantageusement étendu à des opérations de communications sur des réseaux tels qu'Internet, en remplaçant par exemple le coupleur 25 par une carte d'accès réseau.

## Revendications

1. Système de communication comprenant au moins un lien (17, 20) bidirectionnel entre un système central (1) et un système satellite (30) pour faire exécuter des opérations du système central par au moins un sous système périphérique (2, 3, 4, 5) connecté au système satellite, **caractérisé en ce qu'**il comprend:
- dans le système central (1), une carte de contrôle (9) pour recevoir du système satellite, sur le lien (17, 20), au moins une commande de lecture et pour placer en réponse les dites opérations dans un ou plusieurs blocs de données, sur ledit lien, à destination du système satellite ;
- dans le système satellite (30), un coupleur (21) pour envoyer sur le lien (17, 20) à destination du système central (1), au moins une commande de lecture comprenant un numéro d'unité logique et pour recevoir du système central (1) le ou les dits blocs de données sur le lien (17, 20), et au moins un coupleur (22, 23, 24, 25) permettant de relier le système satellite à un sous système périphérique (2, 3, 4, 5) identifié par ledit numéro d'unité logique (LUN00, LUN01, LUN10, LUN11) et permettant de transmettre les informations dudit bloc au sous système périphérique.

2. Procédé de déport d'exécution entre un système central (1) lié par au moins un lien (17, 20) bidirectionnel à un système satellite (30) pour faire exécuter une opération du système central par au moins un sous système périphérique (2, 3, 4, 5) identifié par un numéro d'unité logique (LUN00, LUN01, LUN10, LUN11) connecté via un coupleur (22) au système satellite, **caractérisé en ce qu'**il comprend:
- une première étape (33) dans laquelle le système satellite (30) envoie une commande de lecture au système central (1) la commande comprenant un premier numéro d'unité logique (LUN00)sur ledit lien;
- une deuxième étape (53) dans laquelle le système central (1) répond à ladite commande de lecture en envoyant sur ledit lien au système satellite au moins un bloc de données contenant ladite opération et le premier numéro d'unité logique (LUN00);
- une troisième étape (38) concomitante à la deuxième étape, dans laquelle le système satellite (30) reçoit ledit bloc de données et transmet au sous système périphérique (2, 3, 4, 5) identifié par le premier numéro d'unité logique (LUN00) des informations dudit bloc pour traiter l'opération qu'il contient.

3. Procédé selon la revendication 2, **caractérisé en ce qu'**il comprend:
- une quatrième étape (83) dans laquelle le système satellite (30) envoie une commande d'écriture au système central (1) la commande comprenant un deuxième numéro d'unité logique (LUN10), et au moins un bloc de données résultant de ladite opération exécutée par le système périphérique (2, 3, 4, 5).

4. Procédé selon la revendication 2 ou 3, **caractérisé en ce qu'**il comprend:
- une cinquième étape (35) dans laquelle le système satellite (30) envoie une commande de lecture au système central (1) la commande comprenant un troisième numéro d'unité logique (LUN01);
- une sixième étape (54) dans laquelle le système central (1) répond à ladite commande de lecture en envoyant au moins un bloc de données contenant ladite opération;
- une septième étape (39) concomitante à la cinquième étape, dans laquelle le système satellite (30) reçoit ledit bloc de données et transmet au système périphérique (2, 3, 4, 5) des informations dudit bloc pour traiter l'opération qu'il contient.

5. Procédé selon la revendication 4, **caractérisé en ce qu'**il comprend:
- une huitième étape (43) dans laquelle le système satellite (30) envoie une commande d'écriture au système central (1) la commande comprenant un quatrième numéro d'unité logique (LUN11) et au moins un bloc de données résultant de ladite opération exécutée par le système périphérique (2, 3, 4, 5).

6. Procédé selon l'une des revendications 2 à 5, **caractérisé en ce qu'**un bloc comprend:
- un premier champ (19) pour contenir des commandes ou des données de ladite opération;
- une entête contenant un deuxième champ (11) pour identifier un canal logique correspondant à ladite opération et un troisième champ (12) pour indiquer la longueur du premier champ (19).

7. Système de communication comprenant au moins un lien (17, 20) bidirectionnel entre un système central (1) et un système satellite (30) traitant une opération d'un système central (1), **caractérisé en ce que** le système satellite comprend:
- un premier coupleur (21) pour envoyer une commande de lecture au système central (1) et recevoir en réponse du système central (1), au moins un premier bloc constitué d'un premier champ (19) pour contenir des commandes ou des données de ladite opération ainsi que d'une entête contenant un deuxième champ (11) contenant un canal logique correspondant à ladite opération, un troisième champ (15) contenant un numéro d'unité logique (LUN00, LUN01, LUN10, LUN11) pour identifier un sous système périphérique (2, 3, 4, 5) correspondant et un quatrième troisième champ (12) pour indiquer la longueur du premier champ (19);
- un processeur (26) et une mémoire (27) pour traiter le contenu du champ (19) de commande ou de données en fonction de l'entête du bloc;
- un deuxième coupleur (29) pour envoyer une commande d'écriture au système central (1) accompagnée d'au moins un deuxième bloc dont le premier champ (19) contient un résultat de ladite opération et dont l'entête comprend le canal logique correspondant à ladite opération et le numéro d'unité logique identifiant le sous système périphérique.
- au moins un troisième coupleur (22, 23, 24, 25) pour envoyer à un sous système périphérique (2, 3, 4, 5) identifié par un numéro d'unité logique, le bloc en provenance du système central et contenant la dite opération et recevoir du sous système périphérique le résultat de ladite opération.

## Claims

1. Communication system comprising at least one bidirectional link (17, 20) between a central system (1) and a satellite system (30) for getting operations of the central system executed by at least one peripheral sub-system (2, 3, 4, 5) connected to the satellite system, **characterised in that** it comprises:
- in the central system (1), a control card (9) for receiving from the satellite system, over the link (17, 20), at least one read command and, in response, placing said operations in one or more data blocks over said link, going to the satellite system;
- in the satellite system (30), a coupler (21) for sending over the link (17, 20) to the central system (1) at least one read command comprising a logical unit number and for receiving from the central system (1) said data block(s) over the link (17, 20), and at least one coupler (22, 23, 24, 25) making it possible to connect the satellite system to a peripheral sub-system (2, 3, 4, 5) identified by said logical unit number (LUN00, LUN01, LUN10, LUN11) and making it possible to transmit the information about said block to the peripheral sub-system.

2. Method of retransmitting execution between a central system (1) linked by at least one bidirectional link (17, 20) to a satellite system (30) in order to get an operation of the central system executed by at least one peripheral sub-system (2, 3, 4, 5) identified by a logical unit number (LUN00, LUN01, LUN10, LUN11) connected via a coupler (22) to the satellite system, **characterised in that** it comprises:
- a first step (33) in which the satellite system (30) sends a read command to the central system (1), the command comprising a first logical unit number (LUN00) over said link;
- a second step (53) in which the central system (1) responds to said read command by sending over said link to the satellite system at least one data block containing said operation and the first logical unit number (LUN00);
- a third step (38), concomitant with the second step, in which the satellite system (30) receives said data block and transmits to the peripheral sub-system (2, 3, 4, 5), identified by the first logical unit number (LUN00), information about said block in order to process the operation that it contains.

3. Method according to Claim 2, **characterised in that** it comprises:
- a fourth step (83) in which the satellite system (30) sends a write command to the central system (1) the command comprising a second logical unit number (LUN10), and at least one data block resulting from said operation executed by the peripheral sub-system (2, 3, 4, 5).

4. Method according to the Claim 2 or 3, **characterised in that** it comprises:
- a fifth step (35) in which the satellite system (30) sends a read command to the central system (1), the command comprising a third logical unit number (LUN01);
- a sixth step (54) in which the central system (1) responds to said read command by sending at least one data block containing said operation;
- a seventh step (39), concomitant with the fifth step, in which the satellite system (30) receives said data block and transmits to the peripheral sub-system (2, 3, 4, 5) information about said block in order to process the operation that it contains.

5. Method according to Claim 4, **characterised in that** it comprises:
- an eighth step (43) in which the satellite system (30) sends a write command to the central system (1), the command comprising a fourth logical unit number (LUN11), and at least one data block resulting from said operation executed by the peripheral sub-system (2, 3, 4, 5).

6. Method according to one of Claims 2 to 5, **characterised in that** a block comprises:
- a first field (19) for containing commands or data of said operation;
- a header containing a second field (11) for identifying a logical channel corresponding to said operation and a third field (12) for indicating the length of the first field (19).

7. Communication system comprising at least one bidirectional link (17, 20) between a central system (1) and a satellite system (30) processing an operation of a central system (1), **characterised in that** the satellite system comprises:
- a first coupler (21) for sending a read command to the central system (1) and receiving in response from the central system (1) at least one first block constituted by a first field (19) for containing commands or data of said operation as well as a header containing a second field (11) containing a logical channel corresponding to said operation, a third field (15) containing a logical unit number (LUN00, LUN01, LUN10, LUN11) for identifying a corresponding peripheral sub-system (2, 3, 4, 5) and a fourth field (12) for indicating the length of the first field (19);
- a processor (26) and a memory (27) for processing the content of the control or data field (19) depending on the header of the block;
- a second coupler (29) for sending a write command to the central system (1) accompanied by at least one second block, the first field (19) of which contains a result of said operation, the header of which comprises the logical channel corresponding to said operation and the logical unit number identifying the peripheral sub-system;
- at least one third coupler (22, 23, 24, 25) for sending to the peripheral sub-system (2, 3, 4, 5) identified by a logical unit number, the block coming from the central system and containing said operation, and for receiving the result of said operation from the peripheral sub-system.

## Patentansprüche

1. Kommunikationssystem, mit wenigstens einer bidirektionalen Verbindung (17, 20) zwischen einem Zentralsystem (1) und einem Satellitensystem (30), um Operationen des Zentralsystems durch wenigstens ein an das Satellitensystem angeschlossenes Peripherie-Untersystem (2, 3, 4, 5) auszuführen, **dadurch gekennzeichnet, dass** es umfasst:
- in dem Zentralsystem (1) eine Steuerkarte (9), die von dem Satellitensystem über die Verbindung (17, 20) wenigstens einen Lesebefehl empfängt und in Reaktion darauf diese Operationen in einem oder in mehreren Datenblöcken auf dieser Verbindung zu dem Satellitensystem anordnet;
- in dem Satellitensystem (30) einen Koppler (21), der auf der Verbindung (17, 20) zu dem Zentralsystem (1) wenigstens einen eine Logikeinheit-Nummer enthaltenden Lesebefehl schickt und von dem Zentralsystem (1) den oder die Datenblöcke auf der Verbindung (17, 20) empfängt, und wenigstens einen Koppler (22, 23, 24, 25), der die Verbindung des Satellitensystems mit einem Peripherie-Untersystem (2, 3, 4, 5), das durch die Nummer (LUN00, LUN01, LUN10, LUN11) einer Logikeinheit identifiziert wird, und die Übertragung von Informationen von dem Block zu dem Peripherie-Untersystem ermöglicht.

2. Verfahren zum Verlagern der Ausführung zwischen einem Zentralsystem (1), das über wenigstens eine bidirektionale Verbindung (17, 20) mit einem Satellitensystem (30) verbunden ist, um eine Operation des Zentralsystems durch wenigstens ein Peripherie-Untersystem (2, 3, 4, 5) auszuführen, das durch eine Logikeinheit-Nummer (LUN00, LUN01, LUN10, LUN11) identifiziert wird und über einen Koppler (22) mit dem Satellitensystem verbunden ist, **dadurch gekennzeichnet, dass** es umfasst:
- einen ersten Schritt (33), bei dem das Satellitensystem (30) an das Zentralsystem (1) über die Verbindung einen Lesebefehl schickt, der eine erste Logikeinheit-Nummer (LUN00) enthält;
- einen zweiten Schritt (53), bei dem das Zentralsystem (1) auf diesen Lesebefehl **dadurch** antwortet, dass es auf der Verbindung an das Satellitensystem wenigstens einen die Operation und die erste Logikeinheit-Nummer (LUN00) enthaltenden Datenblock schickt;
- einen dritten Schritt (38), der den zweiten Schritt begleitet und bei dem das Satellitensystem (30) den Datenblock empfängt und an das durch die erste Logikeinheit-Nummer identifizierte Peripherie-Untersystem (2, 3, 4, 5) Informationen des Blocks sendet, um die Operation, die er enthält, zu verarbeiten.

3. Verfahren nach Anspruch 2, **dadurch gekennzeichnet, dass** es umfasst:
- einen vierten Schritt (83), bei dem das Satellitensystem (30) einen Schreibbefehl, der eine zweite Logikeinheit-Nummer (LUN10) enthält, und wenigstens einen Datenblock der sich aus der von dem Peripheriesystem (2, 3, 4, 5) ausgeführten Operation ergibt, an das Zentralsystem (1) schickt.

4. Verfahren nach Anspruch 2 oder 3, **dadurch gekennzeichnet, dass** es umfasst:
- einen fünften Schritt (35), bei dem das Satellitensystem (30) einen Lesebefehl, der eine dritte Logikeinheit-Nummer (LUN01) enthält, an das Zentralsystem (1) schickt;
- einen sechsten Schritt (54), bei dem das Zentralsystem (1) auf den Lesebefehl **dadurch** antwortet, dass es wenigstens einen die Operation enthaltenden Datenblock schickt;
- einen siebten Schritt (39), der den fünften Schritt begleitet und bei dem das Satellitensystem (30) den Datenblock empfängt und Informationen über den Block für die Verarbeitung der Operation, die er enthält, an das Peripheriesystem (2, 3, 4) sendet.

5. Verfahren nach Anspruch 4, **dadurch gekennzeichnet, dass** es umfasst:
- einen achten Schritt (43), bei dem das Satellitensystem (30) einen Schreibbefehl, der eine vierte Logikeinheit-Nummer (LUN11) enthält, und wenigstens einen Datenblock, der sich aus der durch das Peripheriesystem (2, 3, 4, 5) ausgeführten Operation ergibt, an das Zentralsystem (1) schickt.

6. Verfahren nach einem der Ansprüche 2 bis 5, **dadurch gekennzeichnet, dass** ein Block umfasst:
- ein erstes Feld (19), das Befehle oder Daten der Operation enthält;
- einen Kopfabschnitt, der ein zweites Feld (11) für die Identifizierung eines logischen Kanals, der der Operation entspricht, und ein drittes Feld (12) für die Angabe der Länge des ersten Feldes (19) enthält.

7. Kommunikationssystem, das wenigstens eine bidirektionale Verbindung (17, 20) zwischen einem Zentralsystem (1) und einem Satellitensystem (30), das eine Operation eines Zentralsystems (1) ausführt, umfasst, **dadurch gekennzeichnet, dass** das Satellitensystem umfasst:
- einen ersten Koppler (21), der einen Lesebefehl an das Zentralsystem (1) schickt und in Reaktion darauf von dem Zentralsystem (1) wenigstens einen ersten Block empfängt, der gebildet ist aus einem ersten Feld (19), das Befehle oder Daten der Operation enthält, sowie aus einem Kopfabschnitt, der ein zweites Feld (19) mit einem der Operation entsprechenden logischen Kanal, ein drittes Feld (15) mit einer Logikeinheit-Nummer (LUN00, LUN01, LUN10, LUN11) für die Identifizierung eines entsprechenden Peripherie-Untersystems (2, 3, 4, 5) und ein viertes Feld (12) für die Angabe der Länge des ersten Feldes (19) enthält;
- einen Prozessor (26) und einen Speicher (27) für die Verarbeitung des Inhalts des Steuer- oder Datenfeldes (19) in Abhängigkeit vom Kopfabschnitt des Blocks;
- einen zweiten Koppler (29), der an das Zentralsystem (1) einen Schreibbefehl schickt, der von wenigstens einem zweiten Block begleitet wird, wovon das erste Feld (19) ein Ergebnis der Operation enthält und wovon der Kopfabschnitt den logischen Kanal, der der Operation entspricht, und die Logikeinheit-Nummer, die das Peripherie-Untersystem identifiziert, enthält,
- wenigstens einen dritten Koppler (22, 23, 24, 25), der an ein durch die Logikeinheit-Nummer identifiziertes Peripherie-Untersystem (2, 3, 4, 5) den von dem Zentralsystem stammenden, die Operation enthaltenden Block schickt und von dem Peripherie-Untersystem das Ergebnis dieser Operation empfängt.
